# EUROPÄISCHE PATENTSCHRIFT

(11) **EP 1 098 174 B1**
(45) Veröffentlichungstag und Bekanntmachung des Hinweises auf die Patenterteilung: **13.06.2007**
(21) Anmeldenummer: 00123598.5
(22) Anmeldetag: 28.10.2000
(51) Int. Cl.: G01D 18/00

(54) **Programmierbare Gebereinrichtung**
Programmable sensor
Capteur programmable

(30) Priorität: 05.11.1999 DE 19953213; 05.05.2000 DE 10022013
(43) Veröffentlichungstag der Anmeldung: 09.05.2001
(73) Patentinhaber: Micronas GmbH, 79108 Freiburg i. Br. (DE)
(72) Erfinder: Motz, Mario, Dipl.-Ing., 9524 St. Magdalen (AT); Besemann, Michael, Dipl.-Ing., 79108 Freiburg i.Br. (DE)

(56) Entgegenhaltungen:
- EP-A- 0 845 660
- DE-A- 4 422 867
- GB-A- 2 218 214

## Beschreibung

Die Erfindung betrifft eine programmierbare Gebereinrichtung mit einer Signalquelle, die im Betrieb an einem Geberausgang ein Geberausgangssignal erzeugt. Die Signalquelle in der Gebereinrichtung kann ein Sensor für Magnetfelder, Druck, Temperatur oder dergleichen mehr sein, der über eine Ausgangsschaltung mit dem Geberausgang verbunden ist und dort ein analoges oder digitales Signal erzeugt, das über eine mehr oder weniger lange Signalleitung einem Empfänger, beispielsweise einem Steuergerät, zugeführt wird.

Für bestimmte Anwendungen ist es sinnvoll, daß die Gebereinrichtung vom Empfänger beeinflußt werden kann. Denkbar ist hier das Auslösen eines Testbetriebs der Gebereinrichtung oder das Umschalten einer Signalquelle, wenn beispielsweise in der Gebereinrichtung ein Sensor für Temperatur und Magnetfeld vorhanden ist. Beim Vorhandensein eines Sensors in der Gebereinrichtung ist es eventuell auch zweckmäßig, den jeweiligen Meßbereich des Sensors anzupassen oder einen Offset, der innere oder äußere Ursachen haben kann, auszugleichen. Gegebenenfalls sind in der programmierbaren Gebereinrichtung auch Hilfsschaltungen zu steuern, beispielsweise die Frequenz eines Taktgenerators oder die Höhe des Stromes oder Spannungswertes am Geberausgang. Diese Auflistung ist nicht abschließend, sondern soll nur an einigen Beispielen zeigen, daß es in vielen Fällen wünschenswert ist, wenn die Gebereinrichtung vom Empfänger aus programmiert werden kann.

Wird für die programmierbare Gebereinrichtung ein dreibeiniges Gehäuse vorgesehen, von denen das eine Bein fest am Massepotential liegt, dann steht für eine Programmierung über die Gehäuseanschlüsse nur noch der Versorgungsanschluss und der Geberausgang zur Verfügung.

In der von der Anmelderin eingereichten DE 44 22 86 7 A1 ist der Fall ausgeführt, daß die Programmierung über den Versorgungsanschluss erfolgt, indem die Versorgungsspannung in geeigneter Weise in ihrer Größe moduliert wird. Diese Art der Steuersignalübertragung wird Betriebsspannungsmodulation genannt. Da aber oftmals für den Betriebsspannungseingang eine Schutzschaltung vorgesehen und somit der Betriebsspannungswert nur innerhalb eines engen Bereichs veränderbar ist, wird die Eingabe der Steuersignale, die gegenüber der Betriebsspannung einen deutlichen Unterschied aufweisen müssen, verhindert.

Weiterhin ist es bekannt, ähnlich wie bei einem I/O-Anschluss (=Eingang/Ausgang), den Geberausgang sowohl für zu sendende Signale als auch für zu empfangende Signale auszunutzen. Ein derartiger bidirektionaler Datenaustausch über eine I/O-Datenschnittstelle erfordert getrennte Betriebszustände für das Senden und Empfangen. Die Einstellung eines derartigen Betriebszustandes über ein externes Signal, das dem Geberausgang zugeführt wird, ist aber kritisch. Insbesondere könnte durch ein entsprechendes Störsignal am Geberausgang fälschlicherweise dieser Empfangszustand ausgelöst werden, in dem die Gebereinrichtung dann verbleibt. Die Gebereinrichtung ist damit gleichsam durch das Störsignal abgeschaltet worden und muß erst wieder eingeschaltet werden.

In EP 0 845 660 A1 ist eine programmierbare Gebereinrichtung mit einem Sensor beschrieben, die über den Geberausgang mit digitalen Abgleichdaten programmierbar ist. Dabei wird von einem Detektor die Überlagerung des Sensor- und des Abgleichsignals am Geberausgang erkannt und mittels einer I/O-Steuereinrichtung der Signalpfad zwischen dem Sensor und dem Geberausgang getrennt und dafür ein Signalpfad vom Geberausgang zum Signalprozessor für die Abgleichdaten geschaltet.

Aufgabe der Erfindung ist es, eine programmierbare Gebereinrichtung anzugeben, die vom Geberausgang über zugeführte Steuersignale angesteuert wird und bei der es nicht notwendig ist, in einen speziellen Empfangszustand umzuschalten. Dadurch wird eine Übertragung von Geberausgangssignalen nicht beeinträchtigt. Des Weiteren ist außer dem Geberausgang kein weiterer Signalpfad zur Programmierung notwendig.

Der Grundgedanke der Erfindung besteht darin, daß das externe Steuersignal dem jeweiligen Geberausgangssignal überlagert wird und eine Detektionsschaltung in der Gebereinrichtung das im Überlagerungssignal enthaltene Steuersignal erkennt. Der große Vorteil dieser Anordnung besteht darin, daß die Gebereinrichtung nicht zum Empfang eines externen Steuersignals umgeschaltet wird und daher nicht in dem falschen Betriebsmodus festgehalten werden kann. Die Erkennung des Steuersignals erfolgt in der Detektionsschaltung mittels einer mit der Signalquelle gekoppelten Referenzsignalerzeugungsschaltung und einer Vergleichseinrichtung, die ein Referenzsignal mit dem am Geberausgang abgegriffenen Überlagerungssignal vergleicht. Prinzipiell ist es sinnvoll, zur Referenzsignalgenerierung eine Nachbildung der Geberausgangsstufe zu benutzen. Dies schließt eine geeignete Nachbildung eines am Geberausgang angeschlossenen Lastelementes, zum Beispiel ein Widerstand, mit ein. Die Nachbildung der Geberausgangsstufe wird sinnvollerweise mit dem gleichem Signal angesteuert, mit dem auch die eigentliche Geberausgangsstufe angesteuert wird. Somit ist es möglich, als Referenzsignal eine Abbildung des Geberausgangssignals unter nominalen Betriebsbedingungen zu erhalten. Ein Steuersignal, das auf den Geberausgang wirkt, führt zu einer Abweichung von den nominalen Betriebsbedingungen.

Wenn die Vergleichseinrichtung eine deutliche Abweichung vom Referenzsignal feststellt, dann resultiert diese Abweichung von einem Steuersignal, das auf diese Weise erkannt wird. Wenn das Geberausgangsignal ein analoges Spannungssignal ist, das beliebige Werte annehmen kann, dann wird bei einer Widerstandslast unter normalen Betriebsbedingungen ein Strom fließen, der in der Referenzsignalerzeugungsschaltung nachgebildet werden kann. Ist für den Geberausgang ein Laststrom für den nominalen Betriebsbereich des Gebers bekannt, so kann eine Veränderung des Laststroms als Folge einer Veränderung der Belastung des Geberausganges erkannt werden. Die Nachbildung in der Referenzsignalerzeugungsschaltung bildet stattdessen nur den nominalen Laststrom ab. Deutliche Abweichungen in den beiden Signalpegeln weisen dann auf ein Steuersignal hin, das in der Detektionsschaltung erkannt und in der Gebereinrichtung weiterverabeitet werden kann.

Wenn der Geberausgang ein digitales Signal als Ausgangssignal liefert, dann kann ebenfalls eine Nachbildung der Ausgangsstufe zur Bildung des Referenzsignals dienen. Es sind aber auch andere Referenzsignalquellen, zum Beispiel Spannungsquellen für konstante Spannungen, denkbar. Zweckmäßig ist es, wenn bei der Verwendung von Spannungsquellen in der Referenzsignalerzeugungsschaltung in Abhängigkeit von dem jeweiligen Logikzustand des Geberausgangssignals eine zugeordnete Vergleichsspannung als Referenzsignal erzeugt wird. Ein deutliches Über- oder Unterschreiten dieser Vergleichsspannung weist auf das Vorhandensein eines Steuersignals hin.

Eine größere Sicherheit in der Übertragung der Steuersignale auf die Gebereinrichtung erhält man, wenn das Steuersignal mittels einer Datenfolge kodiert ist, der dann in einem der Detektionsschaltung nachgeordneten Dekoder ein bestimmter Befehl zugeordnet ist.

Mittels Datenfolgen als Steuersignale können der Gebereinrichtung auch Datenworte zugeführt werden. Beispielsweise können es Abgleichdaten für die Signalquelle sein, die in einen mit der Signalquelle verkoppelten Speicher geschrieben werden. Zweckmäßige Kodes zur sicheren Übertragung von einzelnen Steuersignalen oder ganzen Datenworten sind auch solche Kodes, bei denen der logische Zustand "1" oder "0" nicht als statischer Bitwert übertragen wird, sondern durch einen Wechsel des logischen Zustandes innerhalb eines bestimmten Zeitintervalles. Kriterien sind hierbei die Richtung des jeweiligen Wechsels oder das Vorliegen oder Nichtvorliegen eines Wechsels. Ob außerhalb dieses Zeitintervalles ein anderer Wechsel stattfindet, ist ohne Bedeutung. Derartige Wechsel sind leicht erkennbar und ermöglichen ein im Mittel ausgeglichenes Puls-Pausenverhältnis sowie die Übertragung eines Grundtaktes zur Funktionskontrolle. Derartige Kodes sind auch unter dem Sammelbegriff "Biphase-Codes" bekannt. Diese Kodes eignen sich auch zur asynchronen Übertragung von Daten, wobei mittel einer Überabtastung im Dekoder die ursprüngliche Datenfolge wieder leicht rekonstruiert werden kann.

Die Erfindung und vorteilhafte Ausführungen werden nun Anhand der Figuren der Zeichnung näher erläutert:
Fig. 1 zeigt schematisch als Blockschaltbild ein Ausführungsbeispiel der Erfindung,
Fig. 2 zeigt eine Open-Drain-Ausgangsstufe mit Nachbildungsschaltung,
Fig. 3 und Fig. 4 zeigen die logischen Zustände an einem digitalen Geberausgang,
Fig. 5 und Fig. 6 zeigen die entsprechenden Ausgänge im Überlagerungsfall,
Fig. 7 zeigt in Form einer Tabelle die statischen Pegel zu Fig. 5 und Fig. 6 und
Fig. 8 zeigt im Zeitdiagramm ein Beispiel für ein Ablaufschema im digitalen Betrieb.

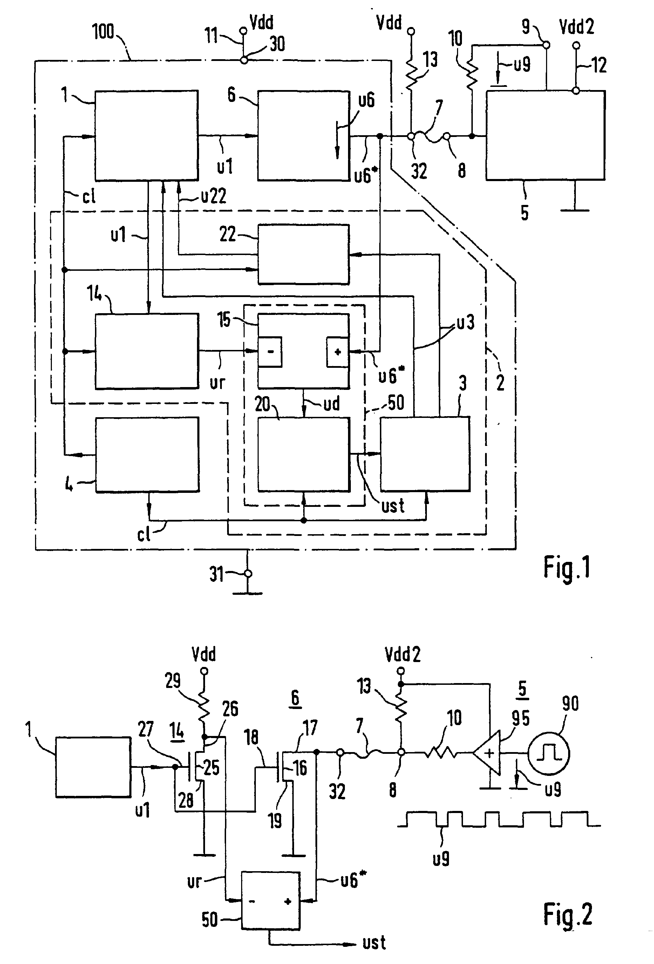

Fig. 1 zeigt das Blockschaltbild eines Ausfiihrungsbeispieles für eine programmierbare Gebereinrichtung 100. Eine Signalquelle 1, die insbesondere ein Sensor sein kann, steuert mit ihrem Ausgangssignal u1 eine Ausgangsstufe 6 und eine Referenzsignalerzeugungsschaltung 14 an. Die Ausgangsstufe 6 erzeugt ein Geberausgangssignal u6 das einem Geberausgangsanschluss 32 zugeführt ist. Handelt es sich dabei um einen Open-Drain-Anschluss eines n-Kanal-Transistors, dann ist zum Beispiel ein Pull-Up-Widerstand 13 zu einer positiven Versorgungsspannung Vdd erforderlich. Diese Versorgungsspannung liegt in diesem Ausführungsbeispiel auch am Versorgungsanschluss 30 über eine Versorgungsleitung 11 an.

Der Geberausgang 32 ist über eine externe Signalleitung 7 mit einer externen Steuereinrichtung 5, im Folgenden als Steuergerät bezeichnet, verbunden. Dieses wertet das von der Gebereinrichtung 100 am Eingangsanschluss 8 empfangene Geberausgangssignal u6 aus. Das Steuergerät 5 hat einen Steuersignalausgang 9, der über einen Modulationswiderstand 10 mit dem Steuergeräteeingang 8 und dadurch über die Signalleitung 7 mit dem Geberausgang 32 verbunden ist. Der Steuergeräteeingang 8 ist hochohmig ausgeführt und hat keinen Einfluß auf die Signalpegelmodulation. Die Spannungsversorgung des Steuergerätes 5 erfolgt durch eine zweite Versorgungsspannung Vdd2 über eine Versorgungsleitung 12, wobei die zweite Versorgungsspannung Vdd2 gleich oder unterschiedlich zur Versorgungsspannung Vdd der Gebereinrichtung ist. Für die weitere Betrachtung wird angenommen, daß die Versorgungsspannung Vdd2 gleich der Versorgungsspannung Vdd ist und der Steuersignalausgang 9 zwischen der Versorgungsspannung Vdd2 und dem Massepotential niederohmig durch das Steuergerät 5 entsprechend den gewünschten Steuersignalen u9 hin- und hergeschaltet werden kann. Über den Modulationswiderstand 10 wird dadurch der Stromfluß in der Ausgangsstufe 6 verändert, was von einer Detektionsschaltung 2 als geänderter Strom- oder Spannungswert detektiert werden kann. Die Detektionsschaltung 2 vergleicht den Sollwert der Ausgangsstufe 6 mit dem tatsächlichen Signal u6* am Geberausgang 32 und bestimmt aus der Differenz dieser beiden Signale, ob das Steuergerät 5 ein Steuersignal u9 gesendet hat.

Zum Vergleich benötigt die Detektionsschaltung 2 einmal als Sollwert ein Referenzsignal ur, das in der Referenzsignalerzeugungsschaltung 14 gebildet wird, und das Ausgangsignal u6*. Der Vergleich beider Signale findet in einer Vergleichseinrichtung, beispielsweise einem Komparator 50, statt, der für den Spannungsvergleich eine Differenzschaltung 15 und eine nachgeschaltete Regenerierungsschaltung 20 mit vorgegebenen Schaltschwellen zur weiteren Störsignalunterdrückung enthält. Das Signal u6* wird im Folgenden als Überlagerungssignal bezeichnet. Wenn das Geberausgangssignal u6 mittels des Steuersignals u9 moduliert ist, dann unterscheidet sich das Überlagerungssignal u6* deutlich vom Referenzsignal ur. In der Differenzschaltung 15 wird aus dem Referenzsignal ur und dem Überlagerungssignal u6* ein Differenzsignal ud erzeugt und an die Regenerierungsschaltung 20 zur internen Rückgewinnung des empfangenen Steuersignals u9 abgegeben. Bei einer getakteten Verarbeitung der Signale kann der Verarbeitungstakt in der Frequenz wesentlich höher liegen als die Datenrate des Steuersignals u9. Dies entspricht einer Überabtastung des Überlagerungssignals u6*. Hierdurch kann sich die Auswertung in der Gebereinrichtung 100 vereinfachen; vor allen Dingen ist keine Verkopplung der Taktsysteme der Gebereinrichtung 100 und des Steuergeräts 5 erforderlich. Das Ausgangssignal ust nach der Regenerierungsschaltung 20 entspricht in seinem logischen Pegel wieder dem ursprünglichen Steuersignal u9 und ist einer Befehlsschaltung 3 zugeführt, die als interne Steuereinrichtung in der Gebereinrichtung 100 dient. Die Bitfolge des internen Steuersignals ust löst in der Befehlsschaltung 3 Befehle u3 aus, die beispielsweise der Signalquelle 1 oder anderen Stufen zugeführt sind. Das Steuergerät 5 kann auch über die Steuersignale u9 Daten an die Gebereinrichtung 100 übertragen, die dann beispielsweise von der Befehlsschaltung 3 in einem mit der Signalquelle 1 gekoppelten Speicher 22 abgelegt werden. Sie enthalten beispielsweise Abgleichdaten u22 für die Signalquelle 1 zur Anpassung an die jeweiligen Arbeitsbedingungen oder zum Abgleich eines Offsets. Zum Betrieb der Gebereinrichtung 100 kann auch ein Oszillator 4 mitintegriert sein, der ein Taktsignal c1 erzeugt, das den zeitlichen Ablauf innerhalb der Gebereinrichtung steuert. Der beschriebene Abgleich der Signalquelle 1 wird über die einzige Datenverbindung zwischen der Gebereinrichtung und dem Steuergerät 5 sehr vereinfacht, weil nach der Erfindung, wie bereits hervorgehoben, der Abgleichvorgang gleichzeitig mit dem Messvorgang stattfinden kann. Ohne die Erfindung müßte der Abgleich in einem anderen Zeitintervall stattfinden, weil die bidirektionale Datenverbindung zwischen Senden und Empfangen dann jeweils umgeschaltet werden müßte.

Fig. 2 zeigt im Detail eine Ausgangsstufe 6 zur Übertragung digitaler Geberausgangssignale mit einem n-Kanal-Transistor 16 in Open-Drain-Schaltung und zugehörigem externem Lastwiderstand 13. Die zugehörige Referenzsignalerzeugungsschaltung 14 enthält eine äquivalente Nachbildung zur Erzeugung des Referenzsignales ur. Die Nachbildung besteht ebenfalls aus einem n-Kanal-Transistor 25 und einem ohmschen Lastwiderstand 29, der an der Versorgungsspannung Vdd liegt. Die Gateanschlüsse 18, 27 beider Transistoren 16, 25 sind mit dem Signal u1 aus der Signalquelle 1 gespeist. Die Sourceanschlüsse 19, 28 sind mit dem Massepotential verbunden. Der Lastwiderstand des Open-Drain-Anschlusses 17 ist über die Signalleitung 7 durch den Pull-Up-Widerstand 13 gebildet. Die Nachbildung des Pull-Up-Widerstandes 13 ist in der Referenzsignalerzeugungsschaltung 14 der Pull-Up-Widerstand 29, der zwischen der Versorgungsspannung Vdd und dem Drainanschluss 26 liegt. Der Nachbildungstransistor 25 kann viel kleiner als der eigentliche Ausgangstransistor 16 sein, wenn auch die Ströme im entsprechenden Verhältnis heruntergesetzt sind. Die geforderte Ähnlichkeit geht durch eine derartige Skalierung bekanntlich nicht verloren.

Für den Komparator 50 wird das Referenzsignal ur am Drainanschluss 26 und das Überlagerungssignal u6* am Drainanschluss 17 abgegriffen. Das Steuergerät 5 enthält einen Steuersignalgenerator 90, der das Steuersignal u9 erzeugt, das mittels eines internen oder externen Treibers 95 ausreichend niederohmig wird, um den Modulationswiderstand 10 anzusteuern. Das digitale Steuersignal u9 moduliert somit die am Steuergeräteeingang 8 vorhandene Spannung, die dort von der Ausgangsstufe 6 in Abhängigkeit vom Signal u1 gebildet ist. Das Ausgangssignal ust des Komparators 50 entspricht in seinem Logikzustand dem Logigzustand des empfangenen Steuersignals u9 und wird daher im folgenden zur Unterscheidung vom externen Steuersignal u9 als internes Steuersignal ust bezeichnet.

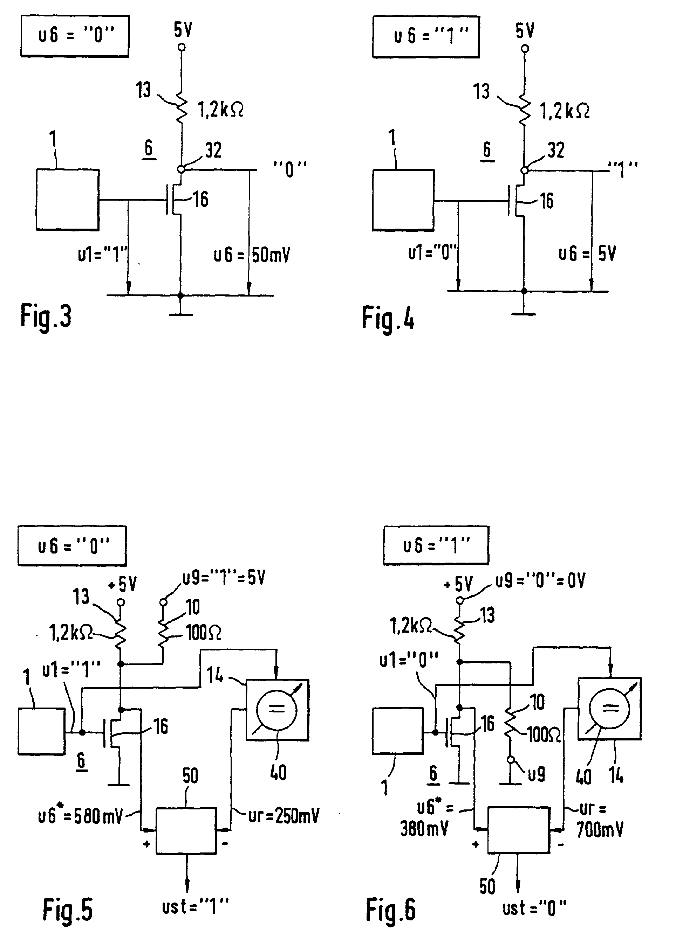

Fig. 3 zeigt den leitenden Zustand des Transitors 16, also bei einem Geberausgangssignal u6 mit dem logischen Zustand "0". Bei einem angenommenen Lastwiderstand 13 von 1200 Ohm und 5 V Versorgungsspannung hat das Geberausgangssignal u6 beispielsweise einen Wert von ca. 50 mV. Und Fig. 4 zeigt den Sperrbetrieb des Transistors 16, bei dem das Geberausgangssignal u6 dem logischen Zustand "1" entspricht. Der Drainanschluss des gesperrten Transistors 16 wird durch den Pull-Up-Widerstand 13 bis auf das Versorgungspotential Vdd von beispielsweise 5 Volt hochgezogen.

In Fig. 5 und Fig. 6 ist eine verbesserte Variante der Referenzsignalerzeugungschaltung 14 dargestellt, die zwei Referenzsignalpegel an ihrem Ausgang bereitstellt. Sie werden von einer gesteuerten Spannungsquelle 40 gebildet, deren Steuereingang vom Ausgangssignal u1 der Signalquelle 1 gesteuert ist, um das Referenzsignal ur in Abhängigkeit vom jeweiligen logischen Ausgangszustand "0", "1" des Transistors 16 vorzugeben. Der logische Zustand der Ausgangsstufe 6 von Fig. 5 bzw. Fig. 6 entspricht dabei dem logischen Zustand von Fig. 3 bzw. von Fig. 4. In Fig. 5 erzeugt die gesteuerte Spannungsquelle 40 ein erstes Referenzsignal ur, das deutlich über dem Geberausgangssignal von 50 mV liegt und beispielsweise einen Wert von 250 mV hat. In Fig. 6 erzeugt die gesteuerte Spannungsquelle ein zweites Referenzsignal ur mit einem Wert, der deutlich über dem im Falle einer logischen "0" des Steuersignals erzeugten Signalpegel am Geberausgang liegt, beispielsweise bei 700 mV.

In Fig. 5 entspricht das externe Steuersignal u9 einer logischen "1" und hat somit den Spannungswert 5 Volt. Der Modulationswiderstand 10 liegt parallel zum Pull-Up-Widerstand 13 zwischen dem Drainanschluss des durchgeschalteten Transistors 16 , der beispielsweise einen Innenwiderstand von 12 Ohm aufweist, und der Versorgungsspannung Vdd von 5 Volt. Die Lastwirkung des Pull-Up-Widerstands 13 von 1200 Ohm wird durch den niederohmigen Modulationswiderstand von 100 Ohm um mehr als den 10-fachen Wert vergrößert, wodurch die Sättigungsspannung des n-Kanal-Transistors 16 durch den zehnmal so großen Strom etwa auf einen Wert von ca +580mV ansteigt. Dieser Spannungswert liegt deutlich über dem vorgegebenen Referenzsignal ur von +250 mV, wodurch der Komparator 50 ein internes Steuersignal ust mit dem logischen Zustand "1" generiert. Ein Steuersignal u9 mit dem logischen Zustand "1" wird somit erkannt, wenn der logische Zustand des von der Signalquelle 1 abhängigen Geberausgangssignals u6 dem logischen Zustand "0" entspricht.

In Fig. 6 entspricht das Geberausgangssignal u6 dem logischen Zustand "1" und das externe Steuergerät 5 sendet ein externes Steuersignal u9 mit dem logischen Zustand "0". Die Ersatzschaltung zur Bildung des Überlagerungssignals u6* unterscheidet sich gegenüber der von Fig. 5 dadurch, daß der n-Kanal-Transistor 16 gesperrt ist. Das Überlagerungssignal u6* , das durch den Spannungsteiler aus Lastwiderstand 13 und Modulationswiderstand 10 aus der Versorgungsspannung Vdd gebildet wird, liegt nun bei +380 mV und ist damit deutlich niedriger als das reine Geberausgangssignal u6 mit 5 Volt von Fig. 4. Die gesteuerte Spannungsquelle 40 in Fig. 6 erzeugt wegen der logischen "1" des Geberausgangssignals u6 ein Referenzsignal ur von +700 mV, das am negativen Eingang des Komparators 50 liegt. Der Spannungsvergleich zwischen dem Überlagerungsignal u6* und dem Referenzsignal ur liefert ein Differenzsignal ud mit - 320 mV. Damit erkennt der Komparator 50 das Vorhandensein eines externen Steuersignals u9 mit dem logischen Zustand "0". Ohne das externe Steuersignal u9 hätte das Differenzsignal ud einen Wert von +4,3 Volt. Dieser Wert signalisiert, daß das externe Steuersignal u9 entweder den logischen Zustand "1" hat oder gar nicht vorhanden ist.

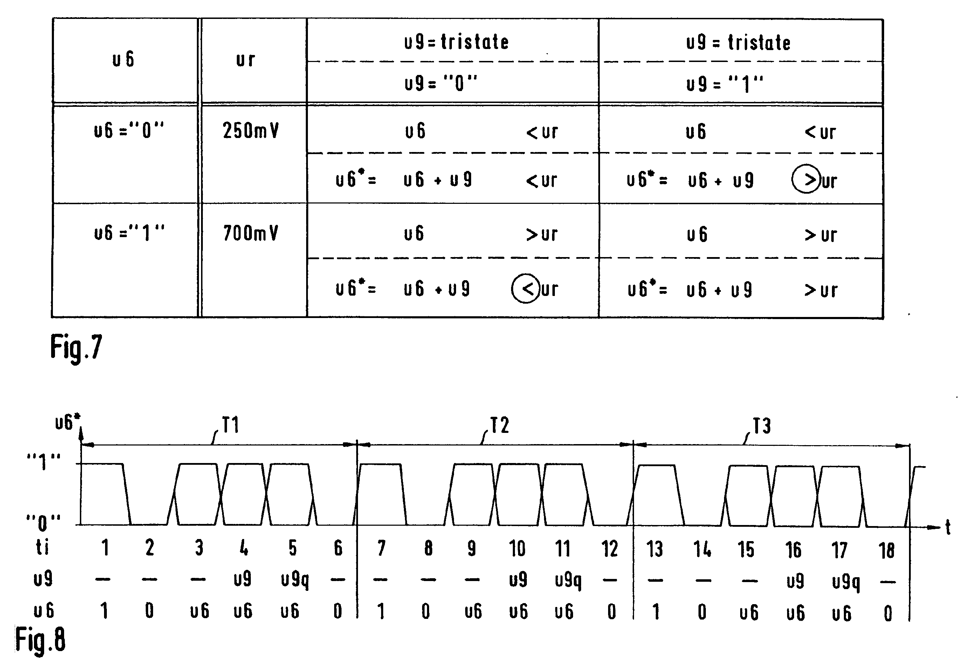

In Fig. 7 sind in Form einer Tabelle die einzelnen Logikzustände entsprechend Fig. 5 und Fig. 6 dargestellt. In der ersten Spalte sind in untereinanderliegenden Zeilenbereichen die beiden Geberausgangssignale u6 mit dem logischen Zustand "0" und dem logischen Zustand "1" angegeben. Die zweite Spalte gibt die beiden zugehörigen Referenzsignale ur mit 250 mV und 700 mV an. In der dritten und vierten Spalte wird angegeben, ob das Überlagerungssignal u6* größer oder kleiner als das zugehörige Referenzsignal ur ist. Dabei gilt die dritte bzw. vierte Spalte für ein Steuersignal u9 mit dem logischen Zustand "0" bzw. "1". Die Zeilen der Spalte drei und vier sind als Doppelzeilen ausgeführt, wobei jeweils in der oberen Doppelzeile das reine Geberausgangsignal u6 mit dem Referenzsignal ur verglichen wird - dies entspricht auch den Fällen, in denen kein Steuersignal u9 gesendet wird. Dieser Zustand wird beispielsweise durch einen "tristate"-Zustand (=hochohmiger Zustand) am Steuersignalausgang 9 bewirkt. In zwei Fällen sind die Vergleichszeichen "> " bzw. "<" durch einen umgebenden Kreis hervorgehoben. Nur in diesen beiden Fällen wird durch das Überlagerungssignal u6* das Vorzeichen des Vergleichs gegenüber dem reinen Geberausgangssignal u6 geändert. In diesen Fällen kann somit eindeutig eine Aussage über das Vorhandensein eines Steuersignals u9 und dessen logischen Zustand in der Gebereinrichtung 100 festgestellt werden.

Bei einer geeigneten Ablaufsteuerung zwischen dem Geberausgangssignal und dem Steuersignal u9 läßt sich in der Gebereinrichtung 100 jedoch in allen Fällen das vom Steuergerät 5 gesendete Steuersignal u9 sicher erkennen. Ein Beispiel hierzu zeigt ein mögliches Ablaufschema des Überlagerungssignals u6* in Fig. 8. Mittels des in der Gebereinrichtung 100 vorhandenen Oszillators 4 wird ein Takt cl erzeugt, der aufeinanderfolgende Taktgruppen T1, T2, T3 bildet. Die Taktgruppen dienen unter anderem der zeitlichen Synchronisierung der Gebereinrichtung 100 mit dem Steuergerät 5. Im angenommenen Beispiel enthält jede Taktgruppe T1, T2, T3 sechs Takte ti, die zur Unterscheidung fortlaufend durchnumeriert sind. Den Beginn jeder Taktgruppe (vergl. ti=1, 7, 13) bildet ein Synchronisierimpuls, bei dem das Geberausgangssignal u6 zwangsweise den logischen Zustand "1" einnimmt. Die unmittelbar davor und dahinter liegenden Takte ti = 2; 6, 8; 12, 14; 18 liegen zwangsweise auf dem logischen Zustand "0". Die folgenden Takte ti = 3,4,5; 9,10,11; 15,16,17 entsprechen dem gewünschten Geberausgangssignal u6. Zusätzlich sendet das zeitlich synchronisierte Steuergerät 5 während der Takte ti = 4, 10, 16 das Steuersignal u9 und während der Takte ti = 5, 11, 17 das invertierte Steuersignal u9q. Entsprechend der Tabelle 7 kann entweder aus dem normalen Steuersignal u9 oder aus dem invertierten Steuersignal u9q eindeutig der richtige logische Zustand des Steuersignals u9 ermittelt werden. Es wird ausdrücklich darauf hingewiesen, daß das Ablaufschema von Fig. 8 als ein Ausführungsbeispiel anzusehen ist. Die dabei verwendeten Prinzipien werden dadurch verdeutlicht und schließen andere Ausführungsbeispiele mit ein, beispielsweise eine der erwähnten Biphasenkodierungen, bei der zu jedem Bestimmungszeitpunkt das Steuersignal u9 in positiver oder negativer Richtung seinen logischen Zustand wechselt, so daß dieser Wechsel auf jeden Fall von der Gebereinrichtung 100 sicher erfaßt werden kann.

Wenn für den Geberausgang 32 auch höhere und tiefere Spannungen als die Versorgungsspannung Vdd und Masse zulässig sind und diese Pegel von der Detektionsschaltung 2 erkannt werden können, dann ist ein entsprechendes Steuerersignal u9 natürlich immer erkennbar.

### Bezugszeichenliste

- 1: Signalquelle
- 2: Detektionsschaltung
- 3: Befehlsschaltung
- 4: Oszillator
- 5: (externe) Steuereinrichtung
- 6: Ausgangsstufe
- 7: Signalleitung
- 8: Eingang für das Gebersignal
- 9: Steuersignalausgang
- 10: Modulationswiderstand
- 11: Betriebsspannungsleitung (Vdd)
- 12: Betriebsspannungsleitung (Vdd2)
- 13: Pull-Up-Widerstand (für Ausgangstransistor)
- 14: Referenzsignalerzeugungsschaltung
- 15: Differenzschaltung
- 16: Ausgangstransistor
- 17: Drainanschluß
- 18: Gateanschluß
- 19: Sourceanschluß
- 20: Regenerierungsschaltung
- 22: Speicher
- 25: Nachbildungstransistor
- 26: Open-Drain-Anschluß
- 27: Gateanschluß
- 28: Sourcanschluß
- 29: Pull-Up-Widerstand
- 30: Versorgungsanschluß
- 31: Masseanschluß
- 32: Geberausgang
- 40: gesteuerte Spannungsquelle
- 50: Komparator
- 90: Steuersignalgenerator
- 91: Verstärker
- 95: Treiber
- 100: Gebereinrichtung
- Vdd: Versorgungsspannung
- Vdd2: 2. Versorgungsspannung
- cl: Takt
- u1: (Signalquellen) Ausgangssignal
- u3: Befehle (Daten)
- u6: Geberausgangssignal
- u9: Steuersignal
- u9q: invertiertes Steuersignal
- ur: Referenzsignal
- ud: Differenzsignal / Ausgangssignal
- u6*: Überlagerungssignal
- ust: (internes) Steuersignal
- t: Zeit
- ti: durchnummerierte Takte
- T1: (erste) Taktgruppe
- T2: (zweite) Taktgruppe
- T3: (dritte) Taktgruppe

## Patentansprüche

1. Programmierbare Gebereinrichtung (100) mit einer Signalquelle (1), insbesondere einem mitintegrierten Sensor, und einem mit einer Ausgangsstufe (6) über einen Signalpfad verbundenem Geberausgang (32) für die Ausgabe eines logischen Geberausgangssignals (u6) und den Empfang eines der Programmierung dienenden logischen Steuersignals (u9), wobei
- das Geberausgangssignal (u6) und das Steuersignal (u9) am Geberausgang (32) über einen dort wirksamen Innenwiderstand ein statisches Überlagerungssignal (u6*) bilden,
- die Erkennung des Steuersignals (u9) aus dem Überlagerungssignal (u6*) mittels einer Detektionsschaltung (2) erfolgt,
**dadurch gekennzeichnet, dass**
- die Funktion der Signalquelle (1) und/oder der Ausgangsstufe (6) zur Bildung des Geberausgangssignals (u6) im wesentlichen von dem Steuersignal (u9) unabhängig ist und
- während keiner Zeit der Steuersignalübertragung eine Abschaltung des Signalpfades zwischen der Signalquelle (1) und dem Geberausgang (32) erfolgt.

2. Gebereinrichtung (100) nach Anspruch 1, **dadurch gekennzeichnet, daß** die Detektionsschaltung (2) eine mit der Signalquelle (1) gekoppelte Referenzsignalerzeugungsschaltung (14) und eine Vergleichseinrichtung (50) enthält, dabei dient die Referenzsignalerzeugungsschaltung zur Bildung eines Referenzsignals (ur) und die Vergleichseinrichtung (50) zum Vergleich des Überlagerungssignals (u6*) mit dem Referenzsignal (ur).

3. Gebereinrichtung (100) nach Anspruch 2, **dadurch gekennzeichnet, daß** die Referenzsignalerzeugungsschaltung (14) zur Bildung des Referenzsignals (ur) eine Nachbildung (25, 29) der Ausgangsstufe (6) enthält.

4. Gebereinrichtung (100) nach Anspruch 3, **dadurch gekennzeichnet, daß** das Geberausgangssignal (u6) ein analoges Signal ist, das innerhalb eines Aussteuerbereiches beliebige Zwischenwerte umfaßt.

5. Gebereinrichtung (100) nach Anspruch 2, **dadurch gekennzeichnet, daß** das Geberausgangssignal (u6) ein digitales Signal ist und daß die Referenzsignalerzeugungsschaltung (14) in Abhängigkeit von dem jeweiligen Pegelzustand der Signalquelle (1) oder des Geberausgangssignals (u6) eine feste Vergleichsgröße als Referenzsignal (ur) erzeugt.

6. Gebereinrichtung (100) nach einem der Ansprüche 1 bis 5, **dadurch gekennzeichnet, daß** das Steuersignal (u9) mittels einer Datenfolge kodiert ist, die in der Detektionsschaltung (2) ein Befehl (u3) generiert.

7. Gebereinrichtung (100) nach Anspruch 6, **dadurch gekennzeichnet, daß** die Datenfolge des Steuersignals (u9) ein Datenwort enthält.

8. Gebereinrichtung (100) nach Anspruch 7, **dadurch gekennzeichnet, daß** das Datenwort Abgleichdaten für die Signalquelle (1) enthält, die in einen mit der Signalquelle (1) verkoppelten Speicher (22) geschrieben werden.

## Claims

1. A programmable transducer device (100) comprising a signal source (1), particularly an on-chip sensor, and a transducer output (32) connected to an output stage (6) via a signal path to output a logic transducer output signal (u6) and to receive a logic control signal (u9) used for programming, wherein
- at the transducer output (32), the transducer output signal (u6) and the control signal (u9) form a static superposition signal (u6*) via an internal resistance effective there,
- the control signal (u9) in the superposition signal (u6*) is detected by means of a detection circuit (2),
**characterized in that**
- the operation of the signal source and/or of the output stage (6) for forming the transducer output signal (u6) is essentially independent of the control signal (u9), and
- during no time of the control signal transmission is the signal path between the signal source (1) and the transducer output (32) turned off.

2. A transducer device (100) as claimed in claim 1, **characterized in that** the detection circuit (2) includes a reference signal generating circuit (14), which is coupled to the signal source (1), and a comparing device (50), the reference signal generating circuit serving to form a reference signal (ur), and the comparing device (50) serving to compare the superposition signal (u6*) with the reference signal (ur).

3. A transducer device (100) as claimed in claim 2, **characterized in that** the reference signal generating circuit (14) for forming the reference signal (ur) comprises an equivalent circuit (25, 29) of the output stage (6).

4. A transducer device (100) as claimed in claim 3, **characterized in that** the transducer output signal (u6) is an analog signal which comprises arbitrary intermediate values within a dynamic range.

5. A transducer device (100) as claimed in claim 2, **characterized in that** the transducer output signal (u6) is a digital signal, and that the reference signal generating circuit (14) generates the reference signal (ur) in the form of a fixed comparison quantity as a function of the respective level state of the signal source (1) or the transducer output signal (u6).

6. A transducer device (100) as claimed in any one of claims 1 to 5, **characterized in that** the control signal (u9) is encoded in a data sequence which generates a command (u3) in the detection circuit (2).

7. A transducer device (100) as claimed in claim 6, **characterized in that** the data sequence of the control signal (u9) includes a data word.

8. A transducer device (100) as claimed in claim 7, **characterized in that** the data word contains alignment data for the signal source (1) which is written into a memory (22) coupled to the signal source (1).

## Revendications

1. Capteur programmable (100) comportant une source de signaux (1), en particulier un senseur intégré, et une sortie de capteur (32) qui est reliée à un étage de sortie (6) par l'intermédiaire d'un trajet de signal et qui est destinée à fournir en sortie un signal logique de sortie du capteur (u6) et à recevoir un signal logique de commande servant à la programmation (u9), dans lequel :
- le signal de sortie du capteur (u6) et le signal de commande (u9) forment un signal de superposition statique (u6*) par l'intermédiaire d'une résistance interne qui est active à cet endroit,
- la reconnaissance du signal de commande (u9) à partir du signal de superposition (u6*) est réalisée au moyen d'un circuit de détection (2),
**caractérisé en ce que** :
- le fonctionnement de la source de signaux (1) et/ou de l'étage de sortie (6) pour la formation du signal logique de sortie du capteur (u6) est essentiellement indépendante du signal de commande (u9) et
- à aucun moment de la transmission du signal de commande, il ne se produit d'interruption du trajet du signal entre la source de signaux (1) et la sortie de capteur (32).

2. Capteur programmable (100) selon la revendication 1, **caractérisé en ce que** le circuit de détection (2) comprend un circuit de génération d'un signal de référence (14), qui est couplé à la source de signaux (1), et un dispositif comparateur (50) et **en ce que**, dans ce cas, le circuit de génération d'un signal de référence (14) sert à la formation d'un signal de référence (ur) et le dispositif comparateur (50) sert à la comparaison du signal de superposition (u6*) avec le signal de référence (ur).

3. Capteur programmable (100) selon la revendication 2, **caractérisé en ce que** le circuit de génération d'un signal de référence (14) comprend, pour la formation du signal de référence (ur), une copie (25, 29) de l'étage de sortie (6).

4. Capteur programmable (100) selon la revendication 3, **caractérisé en ce que** le signal logique de sortie du capteur (u6) est un signal analogique qui comporte des valeurs intermédiaires arbitraires à l'intérieur d'une zone de commande.

5. Capteur programmable (100) selon la revendication 2, **caractérisé en ce que** le signal logique de sortie du capteur (u6) est signal numérique et **en ce que** le circuit de génération d'un signal de référence (14) génère une grandeur fixe de comparaison qui constitue le signal de référence (ur), en fonction du niveau respectif de la source de signaux (1) ou du signalrespectif de sortie du capteur (u6).

6. Capteur programmable (100) selon l'une quelconque des revendications 1 à 3, **caractérisé en ce que** le signal de commande (u9) est codé au moyen d'une suite de données qui génère un ordre (u3) dans le circuit de détection (2).

7. Capteur programmable (100) selon la revendication 6, **caractérisé en ce que** la suite de données du signal de commande (u9) contient un mot d'information

8. Capteur programmable (100) selon la revendication 7, **caractérisé en ce que** le mot d'information contient des données d'égalisation pour la source de signaux (1) qui sont écrites dans une mémoire (22) qui est couplée avec la source de signaux (1).
